# EUROPÄISCHE PATENTSCHRIFT

(11) **EP 3 404 080 B1**
(45) Veröffentlichungstag und Bekanntmachung des Hinweises auf die Patenterteilung: **02.09.2020**
(21) Anmeldenummer: 18171422.1
(22) Anmeldetag: 09.05.2018
(51) Int. Cl.: C10G 45/02, C10G 45/72, C10G 3/00

(54) **VERFAHREN ZUR HERSTELLUNG EINES KRAFTSTOFFS AUS MINERALÖL UND PFLANZENÖL**
METHOD FOR PRODUCING A FUEL FROM MINERAL OIL AND VEGETABLE OIL
PROCÉDÉ DE PRODUCTION DE CARBURANT DE PÉTROLE DE L'HUILE VÉGÉTALE ET HUILE VÉGÉTALE

(30) Priorität: 15.05.2017 DE 102017110512
(43) Veröffentlichungstag der Anmeldung: 21.11.2018
(73) Patentinhaber: Gunvor Raffinerie Ingolstadt GmbH, 85092 Kösching (DE)
(72) Erfinder: MUNDIL, Klaus, 85092 Kösching (DE)
(74) Vertreter: Grünecker Patent- und Rechtsanwälte PartG mbB

(56) Entgegenhaltungen:
- WO-A2-2012/035410
- US-A- 5 972 057
- US-A1- 2011 258 911
- US-B2- 8 932 453
- Jennifer Holmgren ET AL: "A NEW DEVELOPMENT IN RENEWABLE FUELS: GREEN DIESEL INTRODUCTION", , 15. Januar 2007 (2007-01-15), Seiten 1-12, XP055331523, Gefunden im Internet: URL:https://www.bauer.uh.edu/centers/uhgem i/documents/GreenDieselPaperByUOP.pdf [gefunden am 2016-12-23]

## Beschreibung

Die vorliegende Erfindung betrifft ein Verfahren zur Herstellung eines Kraftstoffs aus Mineralöl und Pflanzenöl nach dem Oberbegriff des unabhängigen Anspruchs 1.

Bei der Herstellung von Kraftstoffen aus Mineralöl wie Benzin und Diesel existieren gesetzliche Vorgaben zur Einhaltung der sogenannten Treibhausgasminderungsquote. Der Gesetzgeber schreibt daher vor, dass bei der Herstellung von Kraftstoffen aus Mineralöl nachwachsende oder regenerativ erzeugte Kraftstoffbestandteile beigemischt werden müssen, die über ihren Lebenszyklus weniger Treibhausgas erzeugen als Mineralölprodukte. Derzeit muss für Ottokraftstoff und Diesel mindestens 4 % Treibhausgasminderung nachgewiesen werden. Die derzeit gültige Quote kann beim Ottokraftstoff durch Beimischung von Ethanol eingehalten werden. Dieselkraftstoff wird FAME, auch als Biodiesel bekannt, beigemischt um die Quote einzuhalten.

Die Treibhausgasminderungsquote wurde vor kurzem durch den Gesetzgeber von 4 % auf 6 % erhöht, wobei die neue Quote ab dem Jahre 2020 gilt. Um die neuen gesetzlichen Regelungen einhalten zu können, reicht die Beimischung von Ethanol bzw. FAME nicht mehr aus, denn beide Stoffe können nur bis zu einem bestimmten maximal zulässigen Wert beigemischt werden. Um die Vorgaben zu erfüllen, müssen daher weitere nachwachsende oder regenerativ erzeugte Kraftstoffbestandteile, wie zum Beispiel Pflanzenöl beigemischt werden.

In einer Mineralölraffinerie werden die aus der Rohöldestillation bzw. aus einer Konversionsanlage anfallenden Mineralöle in Hydrieranlagen entschwefelt. Zwei Verfahren zur Beimischung eines regenerativ erzeugten Kraftstoffbestandteils entsprechend dem Oberbegriff des unabhängigen Anspruchs 1 sind aus "A new Development in Renewable Fuels: Green Diesel Introduction" von Holmgren et al. (2007 UOP LLC) bekannt. Das erste dieser Verfahren nach dem Oberbegriff des unabhängigen Anspruchs 1 sieht vor, dass das Pflanzenöl dem Mineralöl bereits vor der Hydrieranlage beigemischt wird. Pflanzenöl und Mineralöl werden somit zusammen der Hydrieranlage zugeführt und entschwefelt. Dieses Verfahren ist unter dem Begriff Co-Hydrotreating bekannt.

US8932453 offenbart eine Hydrieranlage, in der sich zwei verschiedene Beschickungen, nämlich Mineralöl und ein Gemisch aus Mineralöl und Pflanzenöl, in Abhängigkeit von dem Katalysator-Deaktivierungsniveau abwechseln.

Das Problem bei der Durchführung des bekannten Co-Hydrotreating-Verfahrens ist, dass anhand des Endprodukts mittels aufwendiger Verfahren nachgewiesen werden muss, welche Ausbeute den pflanzlichen Rohstoffen zuzuordnen ist. Auch hängt es von der aktuellen Gesetzeslage ab, ob eine solche Anrechnung beigemischter Pflanzenöle überhaupt zulässig ist.

Das zweite in der zuvor erwähnten Druckschrift beschriebene Verfahren sieht vor, dass das Pflanzenöl in einer unabhängigen Hydrieranlage aufbereitet wird und nachfolgend mit dem Endprodukt der Mineralölraffinerie zusammengeführt wird.

Die vorliegende Erfindung hat sich daher zur Aufgabe gestellt, ein Verfahren nach dem Oberbegriff des unabhängigen Anspruchs 1 anzugeben, das die genannten Probleme umgeht und einen einfachen Nachweis erlaubt, wie hoch der Anteil des eingesetzten Pflanzenöls beim Endprodukt tatsächlich ist. Die Erfindung hat sich ferner zur Aufgabe gestellt, eine Hydrieranlage zur Durchführung des Verfahrens bereitzustellen.

Die Erfindung wird gelöst durch die Merkmale des unabhängigen Anspruchs 1. Demnach liegt bei einem Verfahren zur Herstellung eines Kraftstoffs aus Mineralöl und Pflanzenöl nach dem Oberbegriff des unabhängigen Anspruchs 1 dann eine erfindungsgemäße Lösung der Aufgabe vor, wenn die Entschwefelung in wiederkehrenden Zeitblöcken erfolgt, wobei die Hydrieranlage in einem ersten Zeitblock ausschließlich mit Pflanzenöl und in einem darauffolgenden zweiten Zeitblock ausschließlich mit Mineralöl beschickt wird.

Die Erfindung bietet den Vorteil, dass der Prozentsatz des Pflanzenöls im Endprodukt durch eine simple Mengenbilanzierung nachgewiesen werden kann. Das Verfahren kann in einer herkömmlichen Hydrieranlage durchgeführt werden, die zur Verarbeitung von Mineralöl ausgelegt ist. Das Mineralöl oder das Pflanzenöl wird dabei mit Wasserstoff vermischt und bei Temperaturen von bis 400 °C und Drücken von 25 bis 70 bar über einen Katalysator geleitet. Der erste Zeitblock, in dem ausschließlich Pflanzenöl verarbeitet wird, und der zweite Zeitblock, in dem ausschließlich Mineralöl verarbeitet wird, wechseln einander ab. Hydriertes Mineralöl und hydriertes Pflanzenöl können abwechselnd in ein und denselben Tank für das Endprodukt geleitet oder separat gelagert werden.

Vorteilhafte Ausführungsformen des erfindungsgemäßen Verfahrens sind Gegenstand der Unteransprüche 2 bis 9.

Gemäß einer bevorzugten Ausführungsform der vorliegenden Erfindung wird das Mineralöl aus einer Destillations- oder Konversionsanlage zugeführt, in der das Mineralöl kontinuierlich anfällt, wobei das Mineralöl während des ersten Zeitblocks in einen ersten Puffertank geleitet und aus diesem während des zweiten Zeitblocks dem aus der Destillations- oder Konversionsanlage kontinuierlich bereitgestellten Mineralöl beigemischt und der Hydrieranlage zugeführt wird. Die beiden Zeitblöcke und die entsprechenden Mengen sind vorzugsweise so aufeinander abgestimmt, dass der erste Puffertank am Ende des zweiten Zeitblocks vollständig entleert ist. Bei dieser Ausführungsform des erfindungsgemäßen Verfahrens kann der kontinuierliche Betrieb in der Destillations- bzw. Konversionsanlage aufrechterhalten werden, ohne das Mineralöl aus der Destillation oder Konversion während des ersten Zeitblocks, in dem ausschließlich Pflanzenöl in der Hydrieranlage verarbeitet wird, zur weiteren Verarbeitung einer weiteren Anlage zuführen zu müssen.

Bei der zuvor beschriebenen bevorzugten Ausführungsform ist es von besonderem Vorteil, wenn das Pflanzenöl während des ersten Zeitblocks mittels eines Wärmetauschers durch das in den ersten Puffertank ablaufende Mineralöl vorgewärmt und dann der Hydrieranlage zugeführt wird. Dadurch kann die Wärmeenergie des aus der Destillation bzw. Konversion anfallenden Mineralöls genutzt werden, um den Prozess in der Hydrieranlage zu optimieren und Energie einzusparen.

Gemäß einer weiteren bevorzugten Ausführungsform der vorliegenden Erfindung wird der erste Zeitblock spätestens dann beendet, wenn die aus der Beschickung der Hydrieranlage mit dem Pflanzenöl resultierende reversible Deaktivierung des Katalysators so weit fortgeschritten ist, dass ein weiterer Betrieb der Hydrieranlage mit Pflanzenöl unwirtschaftlich ist. Denn der Betrieb der Hydrieranlage mit reinem Pflanzenöl führt zu einer sogenannten Vergiftung des Katalysators, die allerdings rückgängig gemacht werden kann, wenn die Hydrieranlage wieder mit Mineralöl betrieben wird. Der geeignete Zeitpunkt, um den ersten Zeitblock zu beenden, kann beispielsweise anhand der Temperatur des Reaktors ermittelt werden. Die Temperatur des Reaktors nimmt bei Betrieb der Hydrieranlage mit reinem Pflanzenöl aufgrund der reversiblen Deaktivierung kontinuierlich zu.

Gemäß einer weiteren bevorzugten Ausführungsform der vorliegenden Erfindung dauert der erste Zeitblock maximal 2 Tage, bevorzugt maximal einen Tag. Es hat sich herausgestellt, dass der Prozess insgesamt am wirtschaftlichsten ist, wenn die Hydrieranlage maximal einen Tag lang mit reinem Pflanzenöl betrieben wird.

Gemäß einer weiteren bevorzugten Ausführungsform der vorliegenden Erfindung wird der zweite Zeitblock frühestens dann beendet, wenn die aus der Beschickung der Hydrieranlage mit dem Pflanzenöl resultierende reversible Deaktivierung des Katalysators rückgängig gemacht wurde. Der geeignete Zeitpunkt hierfür kann ebenfalls an der Temperatur des Reaktors abgelesen werden. Die Temperatur geht kontinuierlich auf den Wert vor der Pflanzenölverarbeitung zurück, wenn die Hydrieranlage mit reinem Mineralöl betrieben wird. Vorzugsweise dauert der zweite Zeitblock zumindest 5 Tage, weiter vorzugsweise zumindest 7 Tage, weiter vorzugsweise mindestens 10 Tage, und weiter vorzugsweise mindestens 20 Tage an.

Gemäß einer weiteren bevorzugten Ausführungsform der vorliegenden Erfindung wird das Pflanzenöl der Hydrieranlage aus einem zweiten Puffertank zugeführt. Diese Ausführungsform der vorliegenden Erfindung hat den Vorteil, dass das Pflanzenöl in unregelmäßigen Abständen beispielsweise durch LKW oder Schienenverkehr angeliefert werden kann.

Gemäß einer weiteren bevorzugten Ausführungsform der vorliegenden Erfindung ist die Durchsatzmenge an Pflanzenöl pro Zeiteinheit, die der Hydrieranlage während des ersten Zeitblocks zugeführt wird, geringer als die Durchsatzmenge an Mineralöl pro Zeiteinheit, die der Hydrieranlage während des zweiten Zeitblocks zugeführt wird. Beispielsweise kann die Hydrieranlage einen Tag lang mit 80 m³/h Pflanzenöl beschickt werden, wobei gleichzeitig 100 m³/h Mineralöl aus Destillation bzw. Konversion in den ersten Puffertank ablaufen. Anschließend kann die Hydrieranlage im zweiten Zeitblock beispielsweise 10 Tage lang mit 100 m³/h Mineralöl aus der Destillation bzw. Konversion und 10 m³/h Mineralöl aus dem ersten Puffertank beschickt werden. Die Hydrieranlage kann im ersten Zeitblock auch beispielsweise zwei Tage lang mit Pflanzenöl beschickt werden, wobei das Mineralöl aus Destillation bzw. Konversion gleichzeitig in den ersten Puffertank abläuft. Anschließend kann die Hydrieranlage im zweiten Zeitblock beispielsweise 20 Tage lang mit Mineralöl aus der Destillation bzw. Konversion und Mineralöl aus dem ersten Puffertank beschickt werden.

Gemäß einer weiteren bevorzugten Ausführungsform der vorliegenden Erfindung weist die Hydrieranlage eine Regelung auf, mit der sowohl die Zeitdauer des ersten Zeitblocks, während dessen die Hydrieranlage ausschließlich mit Pflanzenöl beschickt wird, als auch die Zeitdauer des zweiten Zeitblocks, während dessen die Hydrieranlage ausschließlich mit Mineralöl beschickt wird, geregelt werden kann. Die Regelung kann auch so eingerichtet sein, dass sie weitere Parameter wie Durchsatzmenge, Temperatur, Treatgasmenge, Wasserstoffpartialdruck usw. regelt, und zwar jeweils optimiert auf den Betrieb mit Mineralöl oder Pflanzenöl.

Gemäß einer bevorzugten Ausführungsform weist die Hydrieranlage einen Temperatursensor auf, mit dem die Temperatur des Reaktors gemessen wird, wobei die Regelung so eingerichtet ist, dass die Zeitdauer des ersten Zeitblocks und die Zeitdauer des zweiten Zeitblocks in Abhängigkeit der Temperatur des Reaktors geregelt werden.

Gemäß einer weiteren bevorzugten Ausführungsform weist die Hydrieranlage ein Mengenbilanzierungssystem auf, mit dem der Anteil des hydrierten Pflanzenöls im Endprodukt nachweisbar ist. Das Mengenbilanzierungssystem kann beispielsweise Messgeber aufweisen, mit welchen die Tankstände im zweiten Puffertank und in dem Tank für das Endprodukt ermittelbar sind. Zusätzlich kann auch ein Messgeber vorgesehen sein, mit dem der Tankstand im ersten Puffertank ermittelbar ist.

Die Erfindung wird im Folgenden anhand von Zeichnungen näher erläutert.

Es zeigen:
- Figur 1:: ein Fließdiagramm zur Veranschaulichung des Betriebs der Hydrieranlage während des ersten Zeitblocks, und
- Figur 2:: ein Fließdiagramm zur Veranschaulichung des Betriebs der Hydrieranlage während des zweiten Zeitblocks.

Für die folgenden Ausführungen gilt, dass gleiche Teile durch gleiche Bezugszeichen bezeichnet werden. Sofern in einer Figur Bezugszeichen enthalten sind, auf die in der zugehörigen Figurenbeschreibung nicht näher eingegangen wird, so wird auf vorangehende oder nachfolgende Figurenbeschreibungen Bezug genommen.

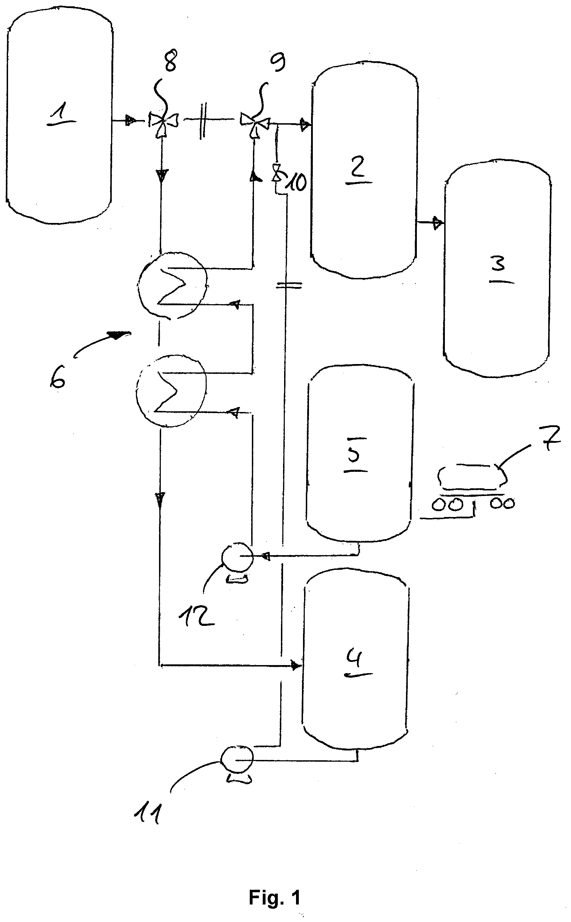

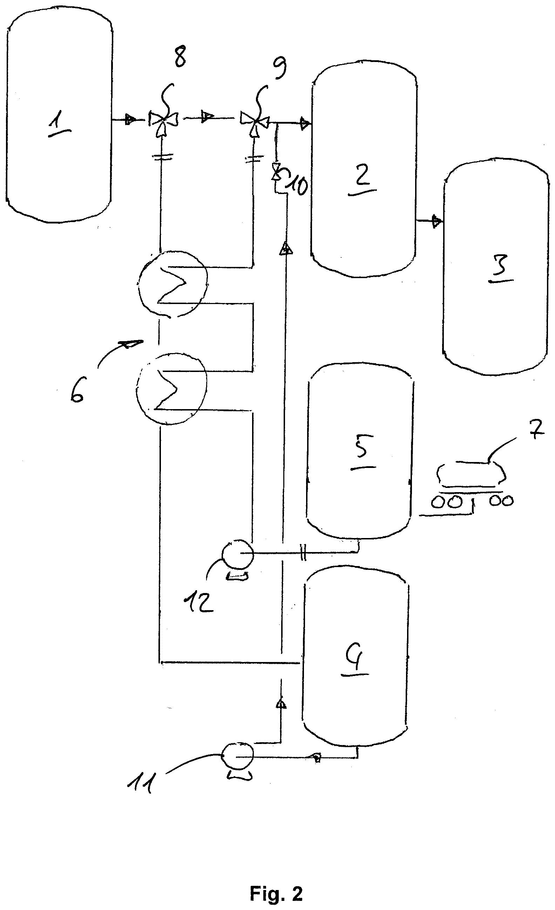

Die Figuren 1 und 2 veranschaulichen das erfindungsgemäße Verfahren, wobei Figur 1 ein Fließdiagramm zeigt, das den Betrieb der Hydrieranlage 2 während des ersten Zeitblocks veranschaulicht, während Figur 2 ein Fließdiagramm zeigt, das den Betrieb der Hydrieranlage 2 während des zweiten Zeitblocks veranschaulicht.

Die verwendete Hydrieranlage 2 befindet sich in unmittelbarer Nähe einer Destillations- bzw. Konversionsanlage 1, in der als Endprodukt kontinuierlich Mineralöl anfällt. Während des ersten Zeitblocks wird das Mineralöl aus der Destillation- oder Konversionsanlage 1 nicht der Hydrieranlage 2 aufgegeben sondern über ein entsprechendes Dreiwegeventil 8 in einen ersten Puffertank 4 geleitet. Die Hydrieranlage 2 wird während des ersten Zeitblocks ausschließlich mit Pflanzenöl beschickt, das mittels der Pumpe 12 aus einem zweiten Puffertank 5 zur Hydrieranlage 2 gefördert wird. In der Leitung vom zweiten Puffertank 5 zur Hydrieranlage 2 befindet sich ein zweites Dreiwegeventil 9, welches hierzu entsprechend gestellt wird. Auf dem Weg vom zweiten Puffertank 5 zur Hydrieranlage 2 wird das Pflanzenöl über einen Wärmetauscher 6 durch das heiße Mineralöl aus der Destillations- bzw. Konversionsanlage vorgewärmt, sodass die Wärmeenergie des aus der Destillations- bzw. Konversionsanlage stammenden Mineralöl nicht verloren geht sondern sinnvoll genutzt wird. Während des ersten Zeitblocks wird somit ausschließlich Pflanzenöl in der Hydrieranlage 2 entschwefelt und einem entsprechenden Tank 3 für das Endprodukt, beispielsweise Benzin oder Diesel, zugeführt. Der zweite Puffertank 5 kann in unregelmäßigen Abständen teilbefüllt werden, beispielsweise von einem Tank-Lkw 7.

Während des ersten Zeitblocks wird der Katalysator der Hydrieranlage 2 allmählich deaktiviert. Der erste Zeitblock wird deshalb beendet, sobald ein weiterer Betrieb der Hydrieranlage mit reinem Pflanzenöl nicht mehr wirtschaftlich ist. Der Zeitpunkt hierfür kann beispielsweise über die Temperatur des Reaktors der Hydrieranlage erkannt werden. Diese steigt mit steigender Deaktivierung des Katalysators.

Nach Beendigung des ersten Zeitblocks wird die Hydrieranlage mit reinem Mineralöl betrieben. Die Pumpe 12, die das Pflanzenöl aus dem zweiten Puffertank 5 zur Hydrieranlage 2 fördert, wird daher abgestellt. Die beiden Dreiwegeventile 8 und 9 werden umgestellt, sodass das Mineralöl aus der Destillation bzw. Konversion direkt zur Hydrieranlage 2 geleitet, und das Pflanzenöl entsprechend abgeriegelt wird. Vom ersten Puffertank führt eine separate Leitung zur Hydrieranlage bzw. mündet kurz vor der Hydrieranlage 2 in die Leitung von der Destillations- bzw. Konversionsanlage 1. In dieser separaten Leitung befindet sich ein Ventil 10, dass während des zweiten Zeitblocks geöffnet wird, sodass das Mineralöl aus dem ersten Puffertank 4 mittels der Pumpe 11 dem aus der Destillation bzw. Konversion anfallenden heißen Mineralöl beigemischt und der Hydrieranlage 2 zugeführt werden kann.

Der zweite Zeitblock wird beendet, wenn die aus der Beschickung der Hydrieranlage mit dem Pflanzenöl resultierende reversible Deaktivierung des Katalysators rückgängig gemacht wurde. Der geeignete Zeitpunkt hierfür kann ebenfalls anhand der Temperatur des Reaktors ermittelt werden. Die Temperatur geht kontinuierlich auf den Wert vor der Pflanzenölverarbeitung zurück, wenn die Hydrieranlage mit reinem Mineralöl betrieben wird.

## Patentansprüche

1. Verfahren zur Herstellung eines Kraftstoffs aus Mineralöl und Pflanzenöl, bei dem das Mineralöl und das Pflanzenöl in einer Hydrieranlage (2) entschwefelt und zu diesem Zweck mit Wasserstoff vermischt unter hohem Druck und hoher Temperatur über einen Katalysator geführt werden, **dadurch gekennzeichnet, dass** die Entschwefelung in wiederkehrenden Zeitblöcken erfolgt, wobei die Hydrieranlage in einem ersten Zeitblock ausschließlich mit Pflanzenöl und in einem darauffolgenden zweiten Zeitblock ausschließlich mit Mineralöl beschickt wird.

2. Verfahren nach Anspruch 1, **dadurch gekennzeichnet, dass** das Mineralöl aus einer Destillations- oder Konversionsanlage (1) zugeführt wird, in der das Mineralöl kontinuierlich anfällt, wobei das Mineralöl während des ersten Zeitblocks in einen ersten Puffertank (4) geleitet und aus diesem während des zweiten Zeitblocks dem aus der Destillations- oder Konversionsanlage (1) kontinuierlich bereitgestellten Mineralöl beigemischt und der Hydrieranlage (2) zugeführt wird.

3. Verfahren nach Anspruch 2, **dadurch gekennzeichnet, dass** das Pflanzenöl während des ersten Zeitblocks mittels eines Wärmetauschers (6) durch das in den ersten Puffertank (4) ablaufende Mineralöl vorgewärmt und dann der Hydrieranlage (2) zugeführt wird.

4. Verfahren nach einem der Ansprüche 1 bis 3, **dadurch gekennzeichnet, dass** der erste Zeitblock spätestens dann beendet wird, wenn die aus der Beschickung der Hydrieranlage (2) mit dem Pflanzenöl resultierende reversible Deaktivierung des Katalysators so weit fortgeschritten ist, dass ein weiterer Betrieb der Hydrieranlage (2) mit Pflanzenöl unwirtschaftlich ist.

5. Verfahren nach einem der Ansprüche 1 bis 4, **dadurch gekennzeichnet, dass** der erste Zeitblock maximal zwei Tage, bevorzugt maximal einen Tag andauert.

6. Verfahren nach einem der Ansprüche 1 bis 5, **dadurch gekennzeichnet, dass** der zweite Zeitblock frühestens dann beendet wird, wenn die aus der Beschickung der Hydrieranlage (2) mit dem Pflanzenöl resultierende reversible Deaktivierung des Katalysators rückgängig gemacht wurde.

7. Verfahren nach Anspruch 6, **dadurch gekennzeichnet, dass** der zweite Zeitblock zumindest 5 Tage, vorzugsweise zumindest 7 Tage, weiter vorzugsweise zumindest 10 Tage, und weiter vorzugsweise zumindest 20 Tage andauert.

8. Verfahren nach einem der Ansprüche 1 bis 7, **dadurch gekennzeichnet, dass** das Pflanzenöl der Hydrieranlage (2) aus einem zweiten Puffertank (5) zugeführt wird.

9. Verfahren nach einem der Ansprüche 1 bis 8, **dadurch gekennzeichnet, dass** die Durchsatzmenge an Pflanzenöl pro Zeiteinheit, die der Hydrieranlage (2) während des ersten Zeitblocks zugeführt wird, geringer ist als die Durchsatzmenge an Mineralöl pro Zeiteinheit, die der Hydrieranlage (2) während des zweiten Zeitblocks zugeführt wird.

## Claims

1. A process for the production of a fuel from mineral oil and vegetable oil, in which the mineral oil and the vegetable oil are desulphurised in a hydrogenation unit (2) and for this purpose are mixed with hydrogen and passed over a catalyst at high pressure and at high temperature, **characterized in that** the desulphurization is carried out in recurring time blocks, wherein the hydrogenation unit is exclusively supplied with vegetable oil in a first time block and is exclusively supplied with mineral oil in an ensuing second time block.

2. The process as claimed in claim 1, **characterized in that** the mineral oil is supplied from a distillation or conversion unit (1) in which the mineral oil is generated continuously, wherein the mineral oil is fed into a first buffer tank (4) during the first time block and from it, during the second time block, is admixed with the mineral oil which is continuously provided from the distillation or conversion unit (1) and supplied to the hydrogenation unit (2).

3. The process as claimed in claim 2, **characterized in that** during the first time block, the vegetable oil is pre-heated by the mineral oil flowing into the first buffer tank (4) by means of a heat exchanger (6) and is then supplied to the hydrogenation unit (2).

4. The process as claimed in one of claims 1 to 3, **characterized in that** the first time block is ended at the latest when the reversible deactivation of the catalyst resulting from supplying the hydrogenation unit (2) with the vegetable oil has advanced to a point such that further operation of the hydrogenation unit (2) with vegetable oil is uneconomical.

5. The process as claimed in one of claims 1 to 4, **characterized in that** the first time block has a maximum duration of two days, preferably a maximum duration of one day.

6. The process as claimed in one of claims 1 to 5, **characterized in that** the second time block is ended at the earliest when the reversible deactivation of the catalyst resulting from supplying the hydrogenation unit (2) with the vegetable oil has been reversed.

7. The process as claimed in claim 6, **characterized in that** the second time block has a duration of at least 5 days, preferably at least 7 days, more preferably at least 10 days, and yet more preferably at least 20 days.

8. The process as claimed in one of claims 1 to 7, **characterized in that** the vegetable oil is supplied to the hydrogenation unit (2) from a second buffer tank (5).

9. The process as claimed in one of claims 1 to 8, **characterized in that** the throughput of vegetable oil per unit time which is supplied to the hydrogenation unit (2) during the first time block is lower than the throughput of mineral oil per unit time which is supplied to the hydrogenation unit (2) during the second time block.

## Revendications

1. Procédé pour la production d'un carburant à partir d'huile minérale et d'huile végétale, dans lequel l'huile minérale et l'huile végétale sont désulfurées dans une installation d'hydrogénation (2) et à cet effet sont mélangées avec de l'hydrogène et passées sur un catalyseur sous haute pression et haute température, **caractérisé en ce que** la désulfuration s'effectue dans des blocs temporels de façon récurrente, dans lequel l'installation d'hydrogénation est chargée dans un premier bloc temporel exclusivement avec de l'huile végétale et dans un second bloc temporel suivant exclusivement avec de l'huile minérale.

2. Procédé selon la revendication 1, **caractérisé en ce que** l'huile minérale est introduite depuis une installation de distillation ou de conversion (1), dans laquelle l'huile minérale est générée en continu, dans lequel pendant le premier bloc temporel l'huile minérale est guidée dans un premier réservoir tampon (4), et à partir de là, pendant le second bloc temporel, est mélangée avec l'huile minérale fournie en continu depuis l'installation de distillation ou de conversion (1) et est introduite dans l'installation d'hydrogénation (2).

3. Procédé selon la revendication 2, **caractérisé en ce que** l'huile végétale est préchauffée pendant le premier bloc temporel au moyen d'un échangeur de chaleur (6) via l'huile minérale s'écoulant dans le premier réservoir tampon (4), puis est introduite dans l'installation d'hydrogénation (2).

4. Procédé selon l'une des revendications 1 à 3, **caractérisé en ce que** le premier bloc temporel est terminé au plus tard lorsque la désactivation réversible du catalyseur résultant du chargement de l'installation d'hydrogénation (2) avec l'huile végétale a progressé à un tel point qu'un fonctionnement supplémentaire de l'installation d'hydrogénation (2) avec l'huile végétale n'est pas rentable.

5. Procédé selon l'une des revendications 1 à 4, **caractérisé en ce que** le premier bloc temporel dure au maximum deux jours, de préférence au maximum un jour.

6. Procédé selon l'une des revendications 1 à 5, **caractérisé en ce que** le second bloc temporel est terminé au plus tôt lorsque la désactivation réversible du catalyseur résultant du chargement de l'installation d'hydrogénation (2) avec l'huile végétale a été inversée.

7. Procédé selon la revendication 6, **caractérisé en ce que** le second bloc temporel dure au moins 5 jours, de préférence au moins 7 jours, de manière plus préférée au moins 10 jours, et de manière encore plus préférée au moins 20 jours.

8. Procédé selon l'une des revendications 1 à 7, **caractérisé en ce que** l'huile végétale est introduite dans l'installation d'hydrogénation (2) à partir d'un second réservoir tampon (5).

9. Procédé selon l'une des revendications 1 à 8, **caractérisé en ce que** le débit d'huile végétale par unité de temps qui est introduite dans l'installation d'hydrogénation (2) pendant le premier bloc temporel est inférieure à la quantité de débit d'huile minérale par unité de temps qui est introduite dans l'installation d'hydrogénation (2) pendant le second bloc temporel.
